# EUROPEAN PATENT APPLICATION

(11) **EP 0 827 351 A1**
(43) Date of publication of application: **04.03.1998**
(21) Application number: 96113970.6
(22) Date of filing: 31.08.1996
(51) Int. Cl.: H04Q 7/10

(54) **Method and apparatus for message numbering in a paging network**

(71) Applicant: FIRMA ERIKA KÖCHLER, CH-8833 Samstagern (CH)
(72) Inventor: Lax, Alexander Peter, Bath BA1 5RR (GB)
(74) Representative: Blum, Rudolf Emil Ernst

(57) **Abstract**

In a paging network the messages sent to the paging receivers are numbered consecutively. Lost messages (3) are detected by the paging receiver due to this numbering. The lost messages will be sent later again upon request of the user. A later sent lost message is provided with the usual consecutive number (6) and is additionally provided with a code (ROLM) indicating that the message is a retransmission of a lost message. In this way the paging receiver can keep track of repeated lost messages in a simple and efficient manner.

## Description

The invention relates to a method according to the preamble of claim 1. Further, the invention relates to a paging network according to the preamble of claim 7 and to a pager according to the preamble of claim 9.

At present in paging systems one method to increase the reliability of message reception over the radio interface is to repeat the transmission. This method works extremely well in terms of successful message reception but it of course increases the time required to send a message. In one way paging systems these repeats are the only reasonable way of ensuring that a message is received. Message numbering has been introduced (for example WO 86/04476) to enable the receiver to identify if a received message is a new one or just a repeat of a previously received message. Even with message repeats, sometimes messages are still lost. In a receiving pager the only way this can be known is when a new message is received and there is a break in the numbering sequence of the received messages. Then the pager can alert the user to the fact that a message is lost.

Accordingly, in high speed paging systems, such as ERMES which is the paging system standard developed by ETSI (European Telecommunication Standards Institute), a numbering system is provided. This numbering system not only enables the receiver to identify different messages but also is intended to enable the receiver to warn the user that a message has been lost. The intention is that when a lost message has been detected the user will then request a retransmission of the message by the network.

When a message retransmission is requested, the number of the message which is then transmitted produces a serious problem for the receiver. If the original message number is sent, then the receiver will assume it has missed several more messages. In the worst case it may suggest that 29 messages have been lost. If on the other hand a new message number is given, then the receiver will still have a message number missing and the user will not know if the message is the requested repeat or just a new message.

It is therefore an object of the invention to provide a paging system where this problem does not occur and where the paging receiver is always able to correctly register the messages even if messages have been lost.

According to the invention, this object is met by a method with the characterizing features of claim 1.

A special code provided for the retransmission of lost messages allows the paging receiver upon detection of this code to solve the problem of the missing message number and to inform the user that the displayed message is the lost message repeated.

In a preferred method, the messages are sent according to the ERMES standard. In a preferred embodiment the code is allocated to the variable information field of the ERMES message and especially is set as 100 at the additional information type field and as 0011 at the additional information number field.

The object is further met by a paging network with the characterizing features of claim 7 and by a paging receiver according to claim 9.

The prior art and embodiments of the present invention will now be described by way of example with reference to the accompanying drawings in which
Fig. 1 is a schematical illustration of a paging network;
Fig. 2 is a first example of a sequence of messages sent by a paging network according to the prior art;
Fig. 3 is a second example of a sequence of messages sent by a paging network according to the prior art;
Fig. 4 is an example of a sequence of messages sent by a paging network according to the invention;
Fig. 5 is a first example of the message structure of a retransmitted message according to the invention;
Fig. 6 is a second example of the message structure of a retransmitted message according to the invention; and
Fig. 7 is a simplified block diagram of a paging receiver according to the invention.

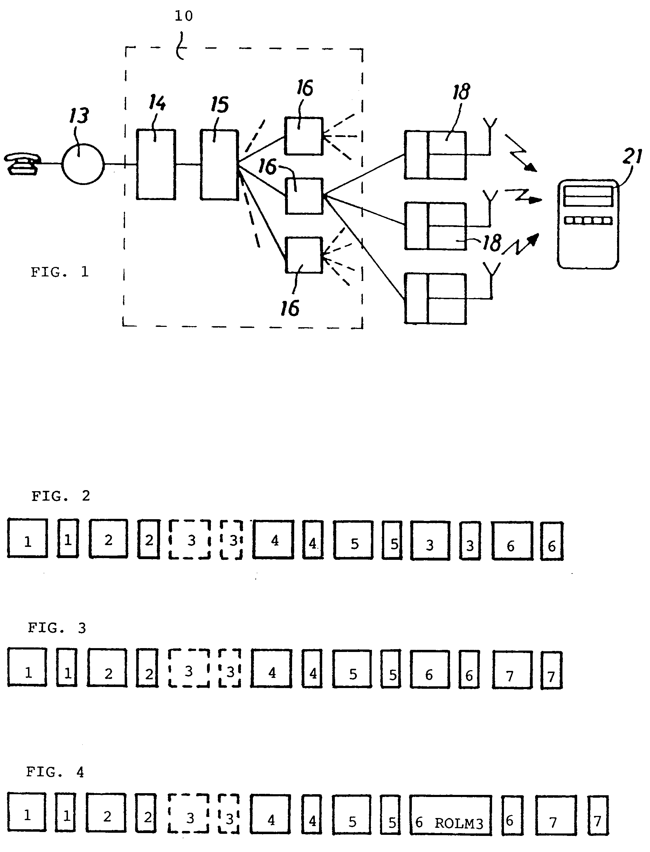

Figure 1 shows the outline of a paging network in a simplified schematic form. A network controller 10 comprises a paging terminal 14 serving as a connection to the public telephone system 13. The paging terminal 14 manages subscriber data and converts incoming calls to serial data streams adapted to the paging network.

A paging network unit 15 is connected to the paging terminal 14 and arranges a number of calls to a data set. Each set is coded and prepared for transmission. The set comprises the individual messages to be sent which are provided with addresses and numbers, as will be explained later.

Several transmitter group controllers 16 at different locations are connected to the paging network unit 15, usually by means of telephone lines. The transmitter group controllers distribute the data sets received from the paging network unit 15 to the radio transmitters or base stations 18, respectively.

The base stations 18 form the end station of the wire-bound transmission of the calls and mark the start for the wireless transmission of the calls. Several base stations 18 are connected via telephone lines with one of the transmitter group controllers 16. The calls are then transmitted by radio to the receivers.

The paging receivers 21 receive the messages and detect from the address to which paging receiver or group of paging receivers the message is directed. The message is decoded, stored and displayed. The paging network described so far is well known in the art and is presented here by way of example only. The invention can just as well be used with other network configurations wherein numbered one-way messages are sent.

Figure 2 shows a sequence of messages sent in conventional manner in a prior art network and addressed to the same paging receiver. The messages are represented in this drawing by boxes, each box containing the address, the message number and the message text. A more detailed message structure will be described later. The message number of each message is shown in the box. As mentioned above, it is known to repeat the messages to increase reliability of message reception. In Figure 2, there are shown smaller boxes which represent the repeated message. In Figure 2 it is assumed that message number 3 is lost, i.e. it does not reach the paging receiver, and the repeated message is lost as well. These messages are represented as dash-lined boxes. When the paging receiver receives message number 4 it can detect that a message was lost since the message number 3 is missing in its message counter. The user of the paging receiver is then alerted by the receiver that a message with number 3 has not been received. The network controller operator can then be informed by the user about this lost transmission and the message with message number 3 will be sent again at a later date. In the example of Figure 2 the number 3 message is sent again with its original message number after message number 5. Message number 3 will then be followed later by message number 6. Here a problem arises for the paging receiver of the prior art network. It will assume that messages 4 and 5 are lost as well since now message number 3 is followed directly by message number 6. Of course, it would be possible to make the paging receiver more intelligent by providing a store keeping track of all message numbers so that it would know that a message with a lower message number than the last message is a replacement for a message detected as lost, but this bookkeeping would use a considerable amount of battery energy. Moreover, since the message number is usually limited (to 30 in the ERMES system) and starts again after reaching the highest number, the paging receiver can not exclude the possibility of lost messages even with keeping track of the numbers. When for example message 3 is retransmitted after message 5, the receiver may reasonably assume as well that messages 6,7,8... 29,30, 1 and 2 have been lost.

Figure 3 shows the alternative prior art solution. Again message number 3 has been lost. When sending this message again, a new message number is given to it by the network controller 10, for example message number 6. Here, the paging receiver will have the problem that message number 3 is still missing and it will alert the user in this way and the user does not know whether message 6 is the requested lost message 3 or a new message.

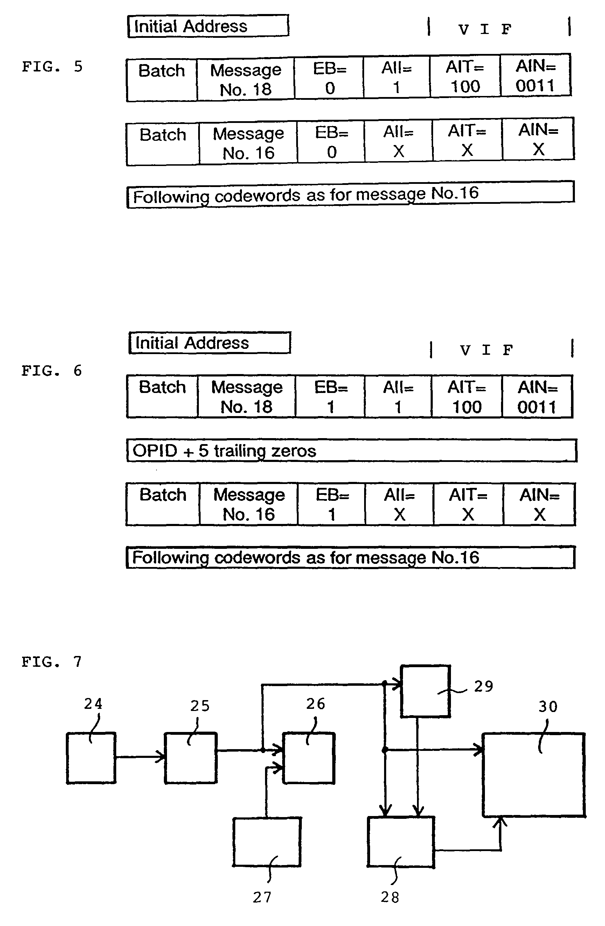

Figure 4 shows the solution according to the invention in the same schematic way as the prior art examples of Figs. 2 and 3. Again it is presumed that the message with the message number 3 has been lost. Upon transmitting this message again upon user's request however, the network control circuit 10, usually the paging network unit 15, will send this message by adding to the normal consecutive message number 6 a code that marks the message as a "repeat of lost message" message. In the box 6 in Fig. 4 this is indicated by ROLM (Repeat of Lost Message). Upon detection and decoding of this code, the paging receiver cancels the alert for the lost message and it can inform the user that the received message is the retransmission requested by the user. If there is a counter provided for lost messages within the paging receiver, this counter is reduced by one and the alert is cancelled when this counter has reached zero again. Therefore, by adding the ROLM code by the network controller and by providing a detector for this code in the paging receiver it is possible to use the normal message numbering sequence for retransmitted lost messages as well and to come to a defined state of the paging receiver.

Figure 5 gives an example with a more detailed message structure shown following the ERMES standard (ERMES ETS 300 133 Part 4). The blocks shown represent one message with different message fields. More information on the ERMES standard message construction than given below can be found in the published standard itself. For the example it is assumed that the receiver has detected that message 16 has been lost and the user has requested the operator of the network to retransmit the lost message. The last message received by the paging receiver was message 17. The following retransmitted message is shown in Fig. 5. The paging receiver is addressed by an initial address and a batch address allowing the paging receiver to detect after an address decoding step whether the message is directed to itself or not. If yes, the message is processed further. The message number is 18 in accordance with the message counter which had been set to 17 before and is now updated to 18. The one bit field EB is zero which indicates that the addressed receiver is in its home network. The one bit field All set to 1 denotes that the following variable information field (VIF) has a 7 bit structure with a 3 bit AIT field and a 4 bit AIN field (AIT = Additional information type; AIN = additional information number). AIT = 100 denotes the information type as "miscellaneous". The following AIN = 0011 code is the code used in this embodiment of the invention to denote a "repeat of lost message (ROLM)" message. In other words, upon receiving and decoding the information AIT = 100, AIN = 0011, the paging receiver knows that the current message is a retransmission of one of the messages that it has recognized as lost messages before. The message with the message number 18 then includes the lost message as shown in Figure 5 where the lost message 16 follows within the message 18.

Using this procedure, the message number of the lost message is identified and in addition the transmission of the lost message will have a separate message number so that the normal message numbering sequence is not modified. The original message is repeated starting with the batch number. This is not strictly necessary but it does maintain the codeword format as in the original message and therefore is a benefit.

Figure 6 shows another example with the same message numbers. The difference is that the External Bit (EB) is 1 and has the meaning that an external receiver is addressed. In this case an operator identification is sent to the paging receiver which is shown as OPID in Figure 6 and is trailed by 5 zeros to complete a codeword (18 bits).

Figure 7 shows a greatly simplified block diagram of a paging receiver where only some elements of the receiver are shown. A radio frequency receiver is shown as box 24. The message in bit stream form is fed from the receiver output to a decoder 25. The address part of the message is compared in a comparator 26 with addresses stored in a store 27. A message counter 28 is activated by the message number of the message. A box 30 represents the handling, storing and displaying of the message. The elements described so far are known. The paging receiver according to the invention is provided with an additional comparator 29 for identifying the "repeat of lost message" code and accordingly informing the message counter 28 that the lost message has been received and/or informing the message handling circuit 29 about the receiving of a message previously regarded as lost message. Of course the shown separate pager elements may be implemented by a microprocessor or other elements including several functions therein.

As described so far, the fact that a message has been lost is detected when the message following on the lost message is received. In a system where message transmission occurs in two parts and in a timely defined manner, another way to detect a loss of a message is possible. After detection of such a loss the user can be alerted and will request retransmission, which will be effected as described before.

In ERMES, message transmission occurs in 2 parts. The first part or first transmission element consists of the address of the pager (in the Address Partition). The second part or second transmission element repeats the address and contains information including the message number and the contents of the message (in the Message Partition). The lost message function discussed before requires the receiver to analyze this second part and then to process the data. This processing may then alert the user if it is determined that a message has been lost. This determination requires that the following message is detected. Proposed now is another procedure to determine if a message is lost.

In ERMES, the second part of the message must follow the first part within a given time limit (12 seconds). This property can now be used to determine if a message has been lost. Thus if the first part of the message has been detected but the second part is not found within 12 seconds then it can be determined that a message has been lost. This can usually only be used if the receiver is receiving data from its "home" network and that there are no messages for "external" receivers. These states are the usual situation and therefore this system can normally be used. (A receiver is receiving signals from a "home" network when the network is the one to which the user is paying his subscription or has registered with. An "external" network is a network other than the home network.) The main benefit of this system is that the user does not have to wait for the reception of the following message before being made aware of the loss of a message.

A preferred embodiment of the retransmission method is therefore that when a receiver is in its "home" network and there are only messages for "home" receivers, if the first part of the message is received but the start of the second part has not been received within 12 seconds, then the receiver will alert the user of a lost message.

However, this time dependent detection of lost messages can as well be effected independently of the above described special retransmission of lost messages.

The paging receiver according to the invention can accordingly be provided with a timer circuit for detection that the second message element has not arrived in time and for initiating the lost message alert.

## Claims

1. A method for transmitting messages in a paging network, said network comprising at least one control unit (10) for preparing numbered messages to be sent, at least one transmitter (18) and a plurality of paging receivers (21), characterized in that for the retransmission of a message that has been reported as lost message, the control unit (10) adds a predetermined code to the retransmitted message designating this message as a retransmission of a lost message, and that the paging receivers (21) are adapted to detect this code and accordingly detect the received message as a retransmission of a lost message sent earlier.

2. A method according to claim 1, characterized in that the messages are sent according to ERMES standard format.

3. A method according to claim 1 or 2, characterized in that the retransmitted message comprises a paging receiver address, a new message number, the code and the lost message starting with the message number of the lost message.

4. A method according to claim 1 or 2, characterized in that the retransmitted message comprises a paging receiver address, a new message number, the code and the lost message starting with the batch number of the lost message.

5. A method according to claim 2, characterized in that the code is inserted in the first variable information field of the retransmitted message.

6. A method according to claim 5, characterized in that the code comprises an additional information type of 100 and an additional information number of 0011.

7. A method according to one of claim 1 to 6 wherein the paging receivers are in their home network and messages are transmitted in at least two elements following each other in a time defined manner characterized in that a message is regarded as lost by the paging receiver and an alert is issued by the receiver if the second element of the transmission is not received within a preset time limit, preferably 12 seconds, after receipt of the first element of the transmission.

8. A paging network comprising at least one control unit (10), at least one transmitter (18) and at least one paging receiver (21), characterized in that the control unit (10) is adapted to add a code designating the sent message as a retransmission of a message reported as lost, and that the paging receiver comprises a detector (29) for this code adapted to send a control signal to the message number counter (28) and/or the message handling unit (30).

9. A paging network according to claim 8, characterized in that it is adapted to send messages in the ERMES standard message format.

10. Paging receiver for receiving paging messages, characterized in that the receiver comprises a detector (29) for a message code designating the message as retransmission of a lost message and that this detector is connected to the message number counter (28) and/or the message handling unit (30) of the paging receiver.

11. Paging receiver according to claim 10 characterized by a timer circuit for detecting whether the second message element of a two part message has been received within a preset time limit after the receipt of the first message element, and if not, for activating the lost message alert of the paging receiver.
